# FASCICULE DE BREVET EUROPEEN

(11) **EP 1 755 928 B1**
(45) Date de publication et mention de la délivrance du brevet: **13.07.2011**
(21) Numéro de dépôt: 05766694.3
(22) Date de dépôt: 26.05.2005
(51) Int. Cl.: B60R 21/045, B62D 25/14

(54) **AGENCEMENT POUR LA PROTECTION DES GENOUX D'UN OCCUPANT D'UN VEHICULE AUTOMOBILE ET PLANCHE DE BORD POUR UN TEL AGENCEMENT.**
ANORDNUNG ZUM SCHUTZ DER KNIE EINES KRAFTFAHRZEUGINSASSEN UND ARMATURENBRETT DAFÜR
ARRANGEMENT FOR PROTECTING A MOTOR VEHICLE PASSENGER'S KNEES AND INSTRUMENT PANEL THEREFOR

(30) Priorité: 02.06.2004 FR 0405920
(43) Date de publication de la demande: 28.02.2007
(73) Titulaire: Renault s.a.s., 92100 Boulogne Billancourt (FR)
(72) Inventeur: LANGLOIS, Sébastien, F-78180 MONTIGNY LE BRETONNEUX (FR); TAVARES, Manuel, F-94230 CACHAN (FR)
(86) Numéro de dépôt international: PCT/FR2005/050372
(87) Numéro de publication internationale: WO 2005/123466

(56) Documents cités:
- US-A- 3 907 326
- US-A- 5 326 130
- US-A- 6 145 880
- US-B1- 6 213 504

## Description

La présente invention concerne un agencement pour la protection des genoux d'un occupant avant d'un véhicule automobile.

L'invention concerne plus particulièrement un agencement pour la protection pour le conducteur ou un passager avant d'un véhicule dont l'habitacle est équipé d'une planche de bord.

La planche de bord est un ensemble structurel comportant des équipements et des accessoires et qui délimite l'habitacle longitudinalement vers l'avant pour le conducteur et le ou les passager(s) avant.

Du côté du conducteur, la planche de bord s'étend notamment transversalement au-dessus de l'ensemble de l'ensemble de direction qui inclut un volant de direction et une colonne de direction.

Les véhicules modernes doivent satisfaire à des contraintes de plus en plus sévères et normalisées en matière de sécurité passive, de protection des occupants, en particulier du conducteur et d'un ou plusieurs passagers avant.

En ce qui concerne la protection du conducteur du véhicule, on connaît déjà des agencements et dispositifs de sécurité passive qui permettent le retrait du volant et/ou le gonflage d'un sac gonflable qui amortit de manière efficace le choc du conducteur contre la partie avant du véhicule, notamment le tableau de bord agencé en partie haute de la planche de bord, contre le volant et/ou le pare-brise.

Afin de protéger les membres inférieurs des occupants avant, et notamment les genoux et la partie inférieure des membres inférieurs qui s'étend en dessous des genoux, on a déjà proposé différents types d'agencements et de dispositifs, notamment passifs, de protection des genoux par absorption d'énergie, en cas de choc ou d'impact des genoux et des tibias équipements de l'habitacle, et notamment contre la partie inférieure de la planche de bord.

Une première solution est décrite et représentée dans le document FR-A-1.115.317 qui consiste en un boudin de protection par amortissement des chocs qui est par exemple réalisé en caoutchouc-mousse et qui s'étend transversalement sur toute la longueur d'un bord de la planche de bord sensiblement au droit des genoux.

Un tel agencement ne permet de répondre aux exigences normalisées actuelles, et notamment à celles définies dans la norme ECE94.

Afin de "gérer" les conséquences du choc d'un genou contre la partie en vis-à-vis de la planche de bord, sans faire appel à des agencements, dispositifs ou systèmes coûteux tels que des coussins gonflables ou des mécanismes de mise sous tension de la ceinture de sécurité, il s'est avéré nécessaire d'améliorer la conception de la partie inférieure ou partie basse de la planche de bord proprement dite en y intégrant, de par sa conception et structurellement, un élément d'absorption d'énergie par déformation plastique sous l'impact des genoux de l'occupant lorsque ces derniers se déplacent globalement longitudinalement vers l'avant en direction de la partie basse de la planche de bord, notamment lorsque le véhicule est soumis à un impact.

La notion de déplacement relatif s'entend des conséquences inhérentes au déplacement relatif de l'occupant par rapport à son siège et/ou au déplacement relatif de la partie avant de l'habitacle, et notamment de la planche de bord, vers l'arrière en direction du siège de l'occupant concerné.

La zone à protéger constituée par les deux genoux d'un occupant est très étendue latéralement, c'est-à-dire selon la direction générale transversale du véhicule, et les moyens à cet effet doivent de préférence présenter une raideur différente selon la direction verticale, notamment en fonction des sections ou tronçons des différents segments de la partie inférieure de la jambe qui s'étend depuis le genou, y compris ce dernier.

Les éléments structurels rigides de la partie avant de l'habitacle du véhicule, et notamment de la planche de bord, sont essentiellement constitués par une poutre ou traverse transversale agencée en position haute qui sert notamment à la fixation de la planche de bord et de l'ensemble de direction, notamment de la colonne de direction.

Cette traverse est située suffisamment haute pour rendre complexes et difficiles l'accrochage et la fixation d'un dispositif de protection destiné aux genoux et aux tibias des jambes.

La colonne de direction elle-même, qui s'étend longitudinalement dans un plan vertical, vers l'avant et vers le bas, est un élément très rigide et quasiment fixe qui, s'agissant du conducteur, doit être "évitée" par les genoux du conducteur.

Il est quasiment impossible d'aménager des éléments de protection sur la colonne de direction qui permettent d'assurer une protection efficace des genoux et des parties inférieures des jambes.

Le document FR-A-2.726.520 décrit et représente à cet égard un agencement pour la protection des membres inférieurs du conducteur comportant une traverse de support fixée à la structure du véhicule pour supporter l'ensemble de direction et qui présente la forme d'un V à branches incurvées de manière à dévier latéralement la trajectoire des membres inférieurs du conducteur en cas de choc ou impact du véhicule contre un obstacle.

Toutefois, un tel dispositif ne permet pas d'assurer une absorption d'énergie suffisante, ni de guider les genoux et tibias selon la direction transversale, c'est à dire de guider chaque partie inférieure d'une jambe de manière qu'elle demeure globalement dans un même plan vertical.

Le document FR-A-2.194.593 décrit et représente un dispositif de protection constituée par une portion inférieure de la planche de bord proprement dite qui constitue un agencement pour la protection des genoux et des tibias.

L'élément de protection s'étend transversalement dans l'habitacle du véhicule en regard des genoux et de la partie supérieure des tibias de l'occupant, ici du conducteur.

Cet élément de protection comporte une partie centrale supportée rigidement par un élément du véhicule constitué par la colonne de direction pour empêcher la déformation de la partie centrale.

Le dispositif de protection constituant l'élément d'absorption d'énergie par déformation plastique comporte enfin deux parties latérales opposées, de gauche ou de droite, qui sont reliées entre elles par la partie centrale.

Chaque partie latérale s'étend en regard d'un genou et de la partie supérieure du tibia d'une jambe associée, gauche ou droite respectivement, du conducteur.

Chacune des parties latérales est supportée rigidement par un élément structurel du véhicule de manière à constituer une partie déformable d'absorption d'énergie.

Toutefois, la solution proposée dans ce document n'est pas satisfaisante dans la mesure où chacune des parties latérales (voir figures 6 et 7 du document), est supportée rigidement par ses bords longitudinaux supérieur et inférieur d'orientation transversale sensiblement horizontale.

Une telle conception a pour inconvénient de présenter une trop grande rigidité dans la portion ou zone de la partie latérale située dans un plan vertical au droit du genou et du tibia correspondant et ne permet ainsi pas une absorption d'énergie suffisante, tout en présentant un risque d'impact ou de choc contre des parties particulièrement rigides susceptibles de provoquer des blessures.

Afin de remédier à ces inconvénients, l'invention propose un agencement pour la protection des genoux du type mentionné précédemment, caractérisé en ce que l'élément d'absorption est en forme générale d'une plaque inférieure, en ce que la partie centrale de la plaque d'absorption est supportée rigidement par un élément central de support qui s'étend globalement dans un plan central vertical et longitudinal, et en ce que chaque partie latérale, gauche ou droite, de la plaque d'absorption est supportée rigidement au voisinage de son extrémité latérale éloignée de la partie centrale, par un élément latéral associé de support qui s'étend dans un plan latéral vertical et longitudinal de manière que chaque partie latérale, gauche ou droite, de la plaque d'absorption soit susceptible de se déformer librement sensiblement sur toute sa hauteur pour constituer progressivement une poche d'absorption et de déformation de section, par un plan sensiblement horizontal, en forme de demi-cercle ou de U et sans obstacle rigide correspondant, et notamment en position inférieure et/ou supérieure dans la zone concernée du genou et du tibia associé.

Selon d'autres caractéristiques de l'invention :
- l'élément central de support est une portion de la colonne de direction qui équipe le poste de conduite du véhicule ;
- la planche de bord comporte une traverse supérieure horizontale à laquelle sont fixés les éléments de support de la plaque d'absorption ;
- la planche de bord comporte une peau dont au moins une portion s'étend en regard de la partie inférieure des membres à protéger, et la plaque d'absorption constitue une doublure de ladite portion de la peau de la planche de bord ;
- la plaque d'absorption formant doublure est assemblée à ladite portion de la peau de la planche de bord ;
- la plaque d'absorption présente un profil galbé, d'axe transversal sensiblement horizontal, avec sa convexité orientée en direction des genoux de l'occupant ;
- la plaque d'absorption est réalisée par moulage en matière plastique ;
- chaque élément de support latéral est un flasque métallique qui s'étend sensiblement dans un plan longitudinal et vertical.

L'invention propose aussi une planche de bord de véhicule automobile pour un agencement de protection selon l'invention, caractérisée en ce qu'elle comporte une peau et en ce que la plaque d'absorption constitue une doublure d'au moins une portion de la peau de la planche de bord.

D'autres caractéristiques et avantages de l'invention apparaîtront à la lecture détaillée qui va suivre pour la compréhension de laquelle on se reportera aux dessins annexés parmi lesquels :
- la figure 1 est une vue schématique en perspective qui illustre la partie de la planche de bord côté conducteur avec sa plaque de protection formant doublure et la partie inférieure du corps du conducteur ;
- la figure 2 est une vue schématique en perspective qui illustre la planche de bord avec sa plaque de protection selon l'invention ;
- la figure 3 est une vue en schématique en perspective qui illustre la partie de la peau externe de la planche de bord côté conducteur avec sa plaque de protection formant doublure ;
- la figure 4 est une vue en perspective qui illustre la partie de la structure rigide de la planche de bord côté conducteur ;
- la figure 5 est une vue en perspective qui illustre la partie de la structure rigide de la planche de bord côté conducteur en association avec la planche de protection conforme aux enseignements de l'invention ;

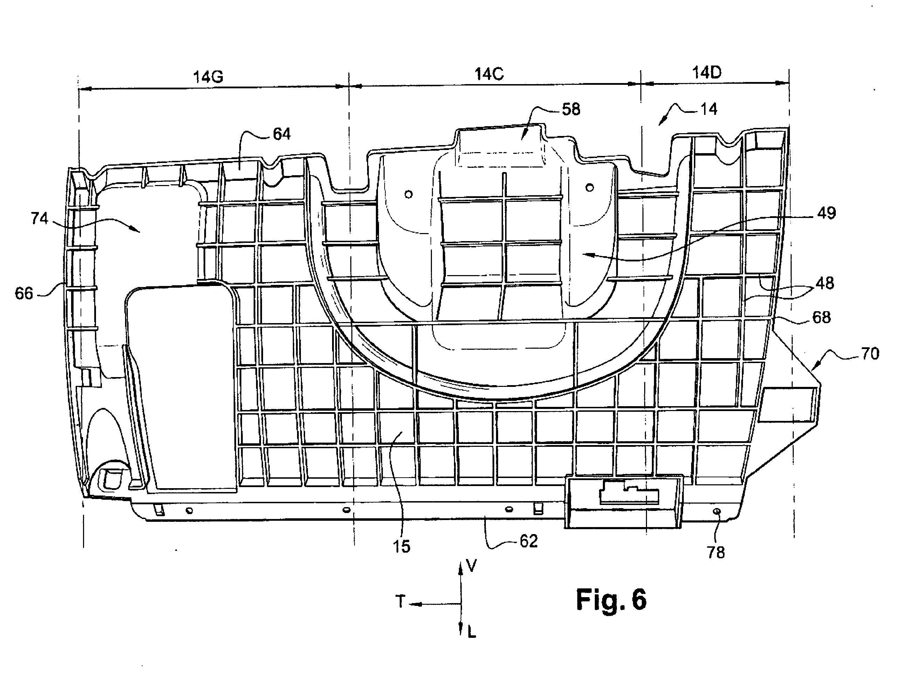

- la figure 6 est une vue en perspective de la plaque de protection selon l'invention ;

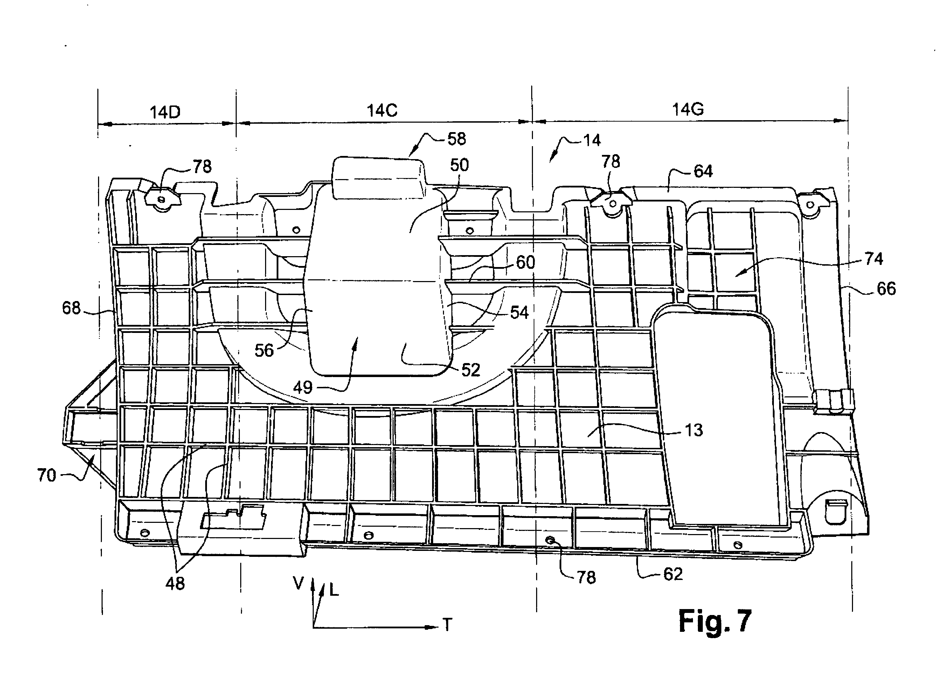

- la figure 7 est une vue en perspective de la plaque de protection selon l'invention selon un autre angle de vue ;

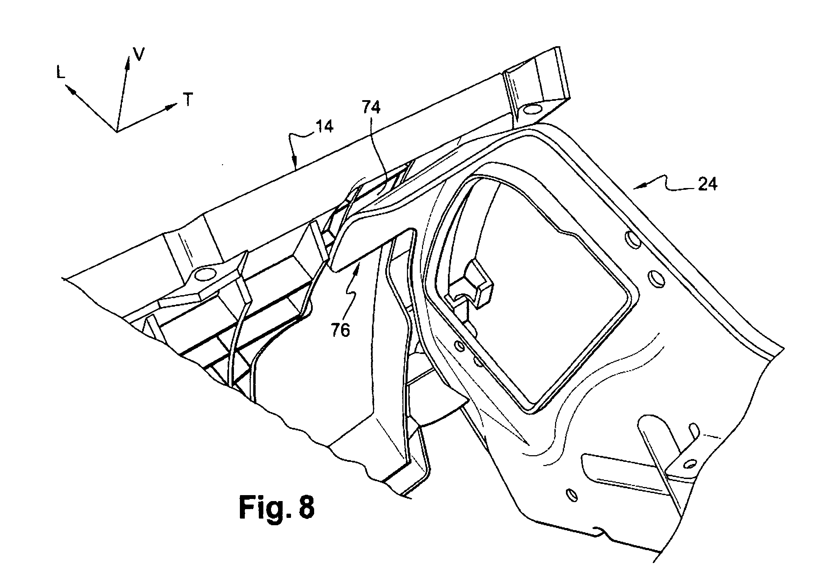

- la figure 8 est une vue en perspective qui illustre à grande échelle un détail de l'agencement de la plaque de doublure par rapport au flasque latéral de support gauche ;
- la figure 9 est un schéma qui illustre le déplacement longitudinal relatif de la partie inférieure du corps du conducteur par rapport à la planche de bord en cas de choc ou d'impact, notamment en cas d'accident ;
- la figure 10 est une vue schématique en section de la planche de bord par un plan longitudinal vertical voisin du flasque latéral support de droite ;
- la figure 11 est une vue schématique en section de la planche de bord par un plan longitudinal vertical correspondant au plan moyen de la colonne de direction.

Dans la description qui va suivre, des éléments identiques, analogues ou similaires seront désignés par les mêmes chiffres de référence.

Afin de faciliter la compréhension de la description et des revendications, on adoptera les termes horizontal, vertical, longitudinal, transversal, gauche, droite, supérieur, haut, inférieur, bas, etc. en référence aux différentes orientations habituelles d'un véhicule et des figures ainsi qu'en référence au trièdre L, V, T indiqué sur les figures. L'axe L est orienté vers l'avant du véhicule tandis que l'axe est orienté vers la gauche du véhicule en considérant le sens de marche avant du véhicule qui est ici un véhicule à poste de conduite à gauche.

On appellera aussi extérieur de l'habitacle toute la zone située longitudinalement vers l'avant au-delà de la face arrière de la planche de bord et intérieur de l'habitacle, toute la zone arrière délimitée par la même face arrière et correspondant à l'intérieur de l'habitacle.

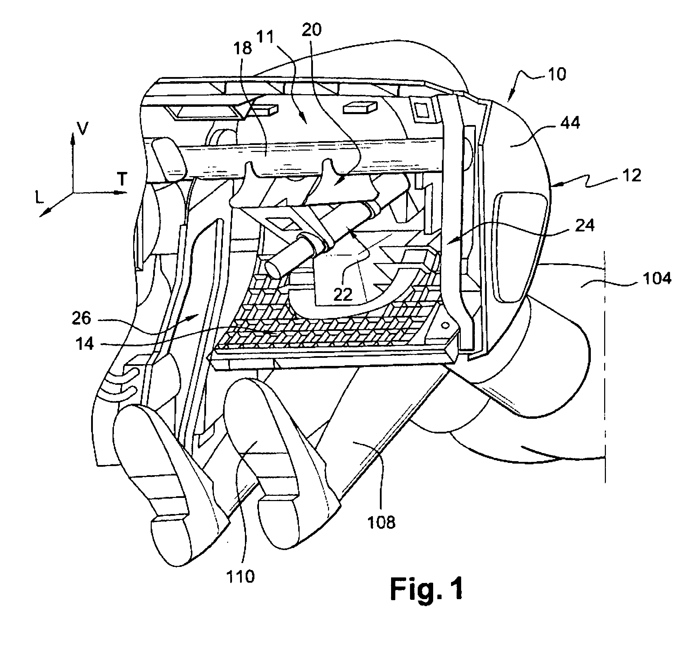

On a représenté aux figures 1 à 5 notamment la partie de gauche de la planche de bord 10 qui est ici agencée au droit du conducteur du véhicule, et donc au droit de la colonne de direction qui comporte essentiellement une structure rigide 11, la peau 12 de la planche de bord 10, et la plaque .14 de protection par absorption d'énergie qui est réalisée conformément aux enseignements de l'invention et qui constitue une doublure de la peau 12 de la planche de bord.

La plaque 14 s'étend en regard de la face latérale interne concave de la partie correspondante inférieure de la peau 12 de la planche de bord.

La structure rigide 11 est constituée pour l'essentiel par un tube horizontal transversal supérieur ou traverse supérieure 18 dont un tronçon de gauche porte notamment un support métallique en forme de platine horizontale 20 sur laquelle est fixée ou suspendue la colonne de direction 22 (représentée à la figure 1) du véhicule.

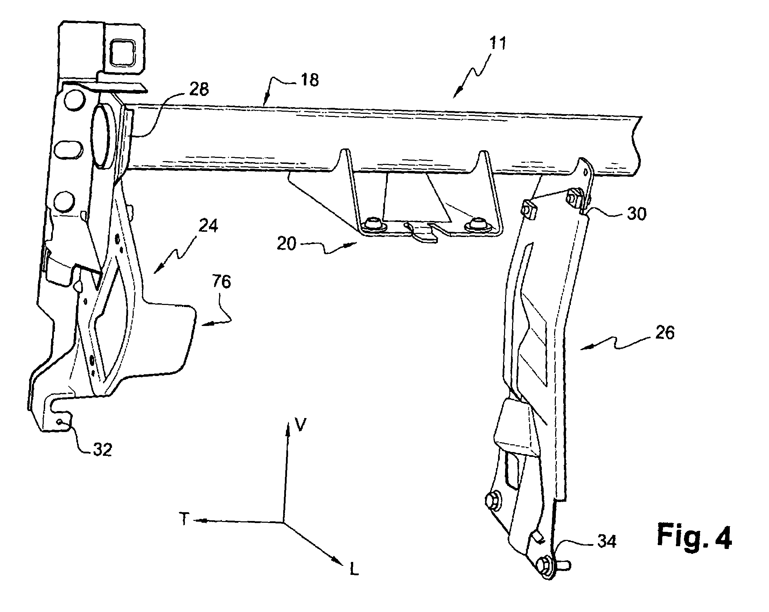

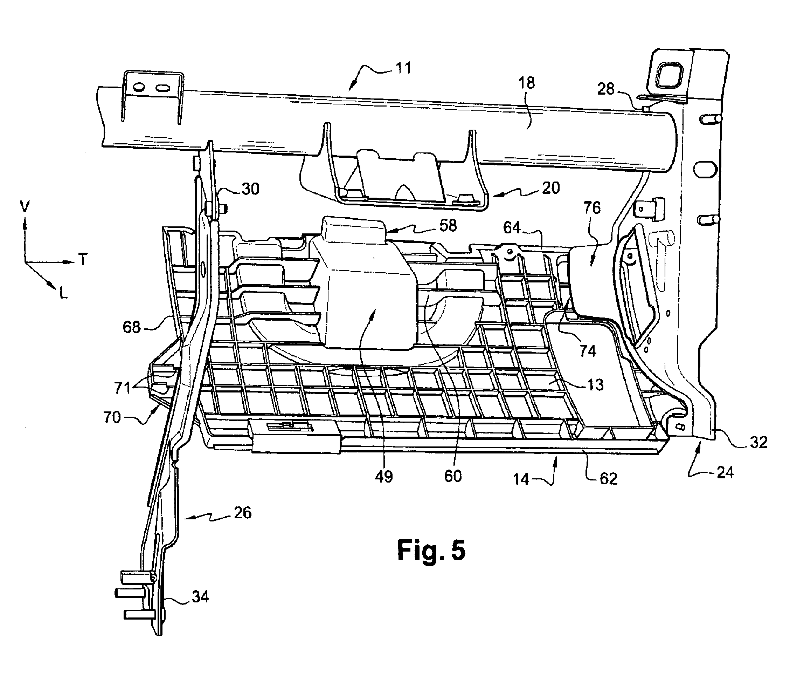

Comme on peut le voir aux figures 4 et 5, la traverse supérieure 18 qui porte le support 20 de la colonne de direction 22 porte un flasque vertical de gauche 24 et à un flasque latéral vertical de droite 26 situés de part et d'autre de la colonne de direction 22.

Le flasque latéral de gauche 24 se présente globalement sous la forme d'une plaque verticale d'orientation longitudinale qui constitue, au sens de l'invention, un élément latéral structurel de support de la doublure 14 de protection par absorption.

De même, le flasque vertical de droite 26, qui s'étend aussi dans un plan vertical et longitudinal, constitue l'élément latéral de support de droite pour la plaque d'absorption 14 au sens de l'invention.

Au sens de l'invention, l'élément central de support destiné à supporter rigidement la partie centrale de la plaque de protection 14 est ici constitué par la colonne de direction proprement dite 22 qui s'étend, comme les flasques latéraux 24 de gauche, et 26 de droite, dans un plan d'orientation verticale et longitudinale.

Les supports latéraux de gauche 24 et de droite 26 sont fixés à leurs extrémités supérieures respectives 28 et 30 sur le tronçon correspondant de la traverse supérieure 18 de la structure rigide 11 et, à leurs extrémités inférieures respectives 32 et 34, à des éléments structurels non représentés de la caisse du véhicule.

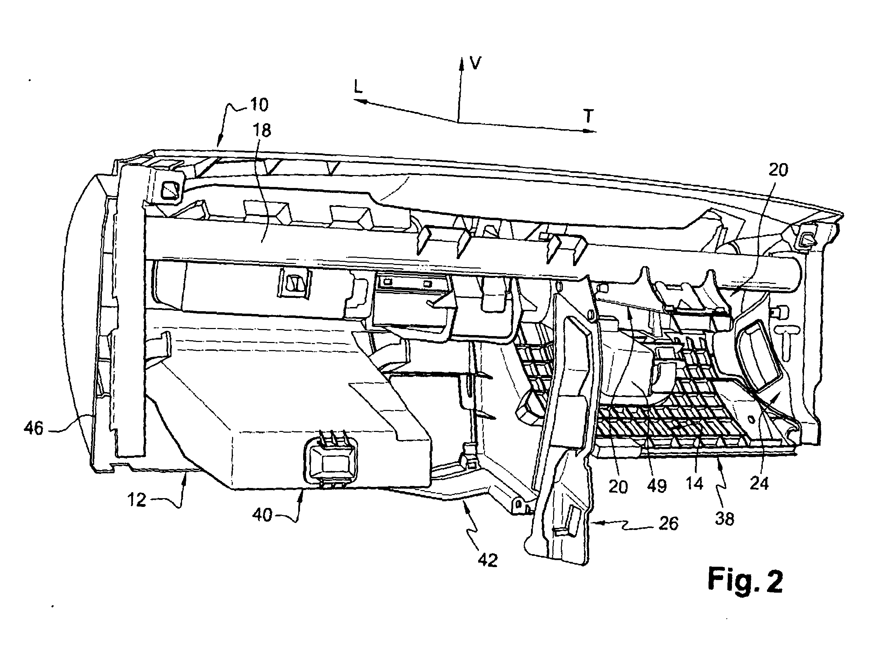

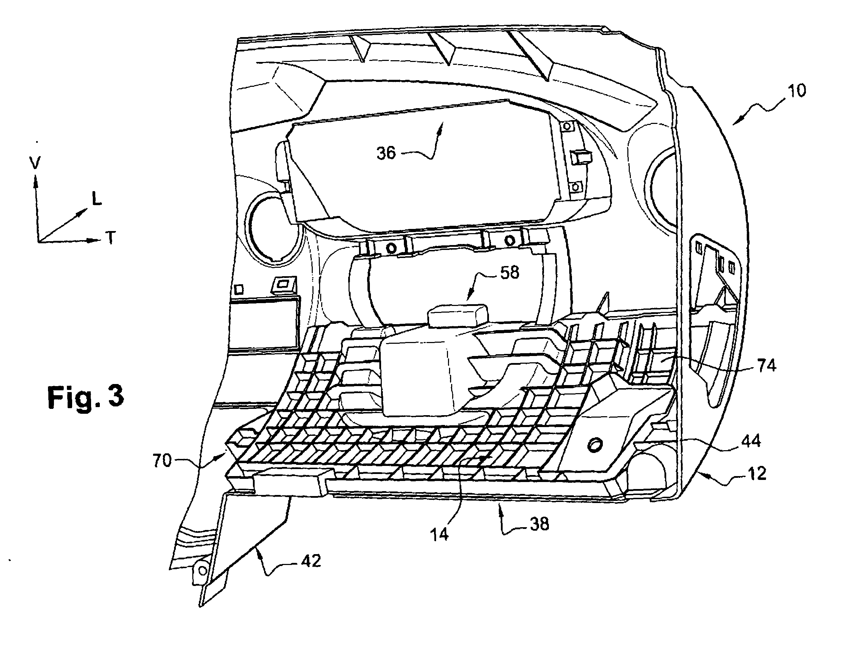

Comme on peut le voir notamment aux figures 2 et 3, la peau 12 de la planche de bord 10 se présente globalement sous la forme d'un ensemble ou coque qui est réalisée par moulage en matière plastique, en une ou plusieurs pièces assemblées, et qui est constitué pour l'essentiel par une paroi principale d'orientation transversale qui s'étend verticalement de haut en bas et qui présente un profil galbé en arc de cylindre d'axe horizontal dont la convexité est orientée vers l'arrière en direction de l'intérieur de l'habitacle, et donc des occupants de la partie avant du véhicule.

La partie supérieure ou partie haute 36 de la planche de bord formant tableau de bord peut recevoir de nombreux équipements et notamment des cadrans et/ou des bouches d'aération (non représentés), tandis que la partie inférieure ou partie basse comporte globalement une portion de gauche 38 située au droit des membres inférieurs du conducteur et une portion de droite 40 située globalement au droit des membres inférieurs du passager avant de droite, ces deux parties latérales de gauche 38 et de droite 40 étant séparées par une portion centrale 42 destinée à recevoir d'autres équipements tels que par exemple un autoradio.

Dans l'exemple illustré aux figures, c'est la partie inférieure de gauche de la planche de bord 10 située au droit du conducteur qui est équipée d'un dispositif d'absorption 14 conforme aux enseignements de l'invention.

La portion inférieure de gauche s'étend globalement entre les deux flasques latéraux formant supports verticaux 24 et 26 décrits précédemment.

La planche de bord 10 est aussi fermée à ses deux extrémités par deux joues latérales verticales de gauche 44 et de droite 46 qui s'étendent sur toute la hauteur de la planche de bord.

La plaque 14 constituant l'élément de protection des genoux 102 du conducteur conformément aux enseignements de l'invention, constitue une doublure de la portion latérale de gauche 38 de la partie inférieure de la planche de bord.

La plaque de protection est illustrée à la figure 5 en association avec la structure rigide 11 constituée essentiellement par la traverse supérieure 18 et les deux flasques latéraux verticaux de gauche 24 et de droite 26.

La plaque de protection 14 est de contour général rectangulaire et elle présente un galbe complémentaire de celui de la face extérieure concave 39 de la portion de gauche 38 de la partie basse de la peau de la planche de bord.

La face arrière convexe 15 de la plaque 14 s'étend en regard de la face concave 39 et la plaque 14 comporte une face avant concave 13.

Les deux faces 13 et 15 sont nervurées par un réseau de nervures de renfort 48 pour lui conférer une rigidité suffisante, notamment pour sa réalisation par moulage et pour maîtriser ses capacités d'absorption d'énergie.

Dans sa partie centrale 14C, et en partie haute, la plaque de protection 14 comporte un renflement 49 orienté vers l'avant délimité par une plaque horizontale 50, une plaque sensiblement verticale avant 52 et deux joues latérales de gauche 54 et de droite 56.

Le renflement 49 constitue un socle rigide qui comporte, à son extrémité supérieure et arrière, une partie parallélépipédique rectangle verticalement en saillie vers le haut formant un butoir 58.

Le renflement 49 est relié au reste de la plaque 14 par des nervures verticales 60 de renfort et de rigidification.

La plaque de protection 14 est délimitée par ses bords transversaux horizontaux inférieur 62 et supérieur 64 et par ses deux bords latéraux d'orientation verticale gauche 66 et droit 68. Ces quatre bords périphériques sont aussi nervurés.

Au-delà de son bord latéral droit 68, la plaque ou doublure de protection 14 comporte une patte d'appui ou de butée 70 qui fait saillie transversalement vers la droite et qui est destinée, par sa zone encochée 71, à venir coopérer avec une portion en vis-à-vis du bord vertical flasque latéral droit 26 formant support rigide d'appui pour la plaque 14, en cas d'impact ou de choc de manière que la plaque de protection 14 soit supportée rigidement sensiblement le long de son bord vertical droit 68 d'extrémité latérale.

De la même manière, au voisinage de son bord latéral vertical gauche 66 et en partie supérieure de la plaque, cette dernière comporte une zone pleine d'appui ou de butée 74 qui s'étend en regard d'une patte 76 d'une forme complémentaire appartenant au flasque latéral de gauche 24 constituant le support latéral d'appui de gauche pour la plaque d'absorption 14.

En position montée de l'ensemble et à l'état neuf, c'est-à-dire avant un choc quelconque, il existe de préférence un jeu entre la patte 70 et la partie en vis-à-vis du support ou flasque latéral droit 26 et un même jeu, globalement selon la direction longitudinale, entre la patte 76 du flasque ou support latéral gauche 24 et la partie d'appui ou de butée 74 en vis-à-vis de la plaque de protection 14.

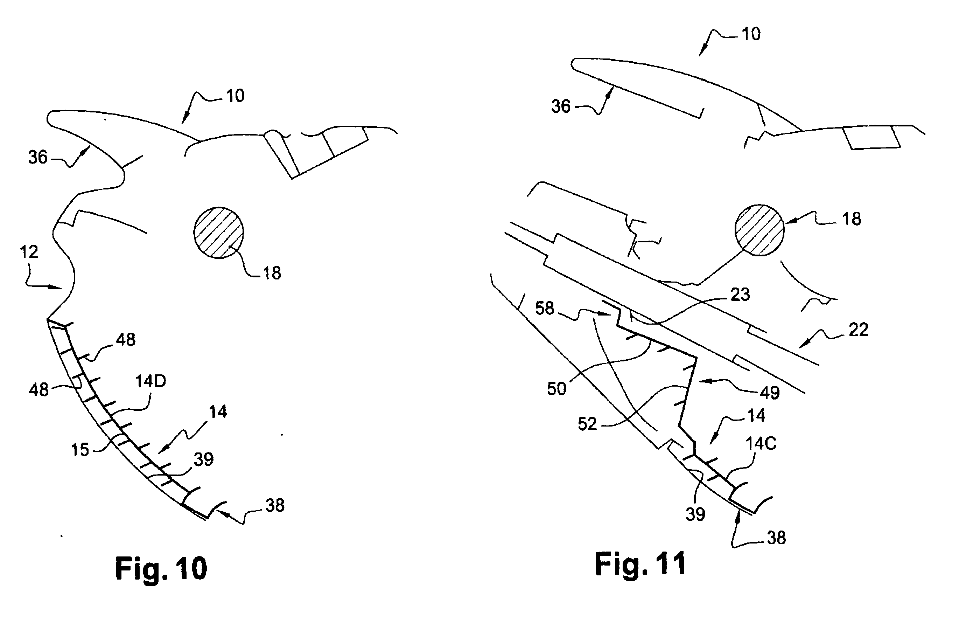

De même, le butoir 58 porté par le renflement 49 s'étend en regard d'une partie correspondante 23 en vis-à-vis de la colonne de direction 22, de préférence aussi avec un léger jeu selon la direction transversale (voir figure 11).

La présence des jeux, selon la direction longitudinale, qui viennent d'être mentionnés entre les parties correspondantes de la plaque de protection 14 et des éléments structurels rigides associées 22, 24 et 26 permet, d'une part, d'éviter des bruits par contacts ou chocs vibratoires lors du roulage normal du véhicule et elle permet, d'autre part, d'assurer une certaine élasticité lors de la phase initiale de venue en contact des genoux 102 contre la peau 12 de la planche de bord qui est doublée par la plaque de protection 14, avant que cette dernière vienne en contact avec ses appuis structurels qui sont au nombre de trois avec un appui structurel central d'orientation verticale 22 et deux appuis structurels latéraux gauche 24 et droit 26 d'orientation verticale.

Le long de ses quatre bords, la plaque formant doublure de protection 14 présente de nombreux points 78 de fixation sur la peau 12. La plaque de doublure 14 est ainsi fixée à la peau 12, 38 qui la porte en position fonctionnelle, c'est à dire dans la position avant choc illustrée aux figures.

La plaque 14 est ainsi très facile à réaliser par moulage et à assembler sur la planche de bord.

Grâce à l'agencement selon l'invention on obtient une très bonne déformation maîtrisée de la zone correspondante de la planche de bord avec un guidage des genoux 102 et des tibias 108 dans des zones de la planche de bord et de la plaque d'absorption 14 formant doublure dans lesquelles il n'y aucun organe ou élément rigide susceptible d'induire des blessures à ces parties des membres inférieurs du conducteur.

La conception selon l'invention de la plaque de protection 14 par absorption avec l'agencement particulier de ses éléments de support 22, 24 et 26 contre lesquels elle vient en appui longitudinalement vers l'avant en cas de choc, permet ainsi de "programmer" la déformation des zones de la planche de bord en regard des parties inférieures des jambes de façon, d'une part, à absorber suffisamment d'énergie et, d'autre part, éviter les contacts avec les parties rigides, ainsi qu'avec la colonne de direction proprement dite 22 dans la mesure où la partie centrale de la plaque 14C, qui est réalisée venue de matière en une seule pièce par moulage avec les parties latérales de gauche 14G et de droite 14D, constitue une plaque d'enrobage et d'habillage qui permet aussi de dévier les genoux 102 en direction des parties latérales actives 14G et 14D qui se déforment librement entre, d'une part, la colonne de direction 22 et, d'autre part, les flasques ou supports latéraux verticaux gauche 24 et droit 26.

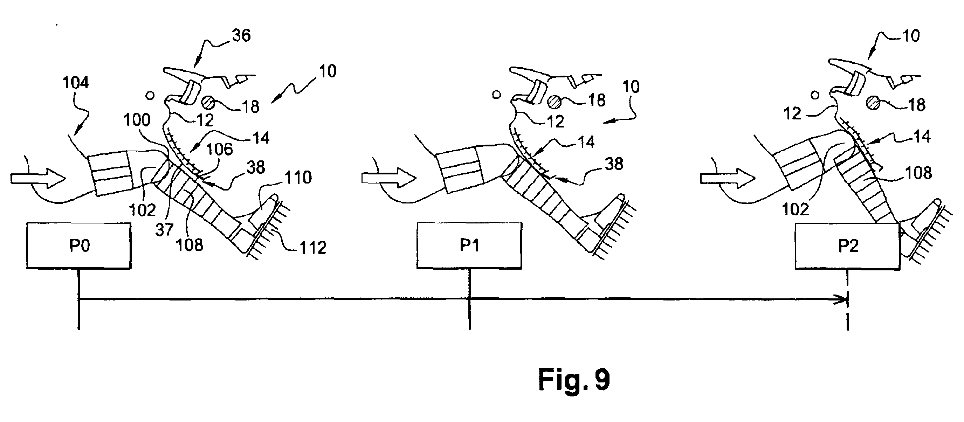

Comme on peut le voir à la figure 9, dans la position initiale P0 avant choc, la face avant 100 du genou 102 du conducteur 104, de même que la face avant 106 de la partie supérieure 108 du tibia, sont situées en regard de la partie basse de gauche 38 de la planche de bord 10, tandis que le pied 110 est en appui sur une partie fixe 112 du plancher ou sur une pédale.

En cas de choc lors d'un accident, on voit le déplacement relatif de la partie inférieure du corps du passager 104 jusqu'à la position intermédiaire P1 dans laquelle les faces avant 100 et 106 arrivent au contact de la face arrière intérieure convexe 37 de la partie basse 38 de la peau 12 qui est doublée par la plaque de protection 14.

Ensuite, le déplacement relatif et l'impact provoquent la déformation progressive de la partie latérale correspondante (14D ou 14G) de la plaque de protection 14, jusqu'à la position de "fin de course" P2.

Chaque partie inférieure de la jambe bénéficie ainsi d'une protection optimale par absorption de l'énergie et sans rencontrer d'obstacle rigide, la partie latérale associée, 14D ou 14G de la plaque avec la portion correspondante de la peau 12 se comportant comme une "toile" déformable qui absorbe l'énergie en "épousant progressivement le contour externe de la partie correspondante de la jambe.

Bien entendu, la distance moyenne, selon la direction transversale, entre un élément de support latéral 24, 26 et l'élément de support central 22 est supérieure à la largeur moyenne de la partie inférieure d'une jambe de l'occupant de manière à permettre la "pénétration" de la jambe dans la zone correspondante sans venir percuter ni la colonne de direction, ni le support latéral correspondant.

L'ensemble des paramètres d'absorption et de comportement de la plaque 14 peuvent être déterminés et modifiés en fonction de ses dimensions, de ses nervures de renfort-rigidification, de son positionnement, etc.

L'invention n'est pas limitée à la protection des jambes du conducteur mais peut aussi s'appliquer aux jambes du passager avant en prévoyant un flasque central ou intermédiaire en lieu et place de la colonne de direction 22.

## Revendications

1. Agencement pour la protection des genoux (100, 102) d'un occupant avant d'un véhicule dont l'habitacle est équipé d'une planche de bord (10), l'agencement de protection comportant un élément (14) d'absorption d'énergie, par déformation plastique sous l'impact des genoux (100, 102) de l'occupant lorsque ces derniers se déplacent globalement longitudinalement vers l'avant en direction de la partie inférieure de la planche de bord (10), lorsque le véhicule est soumis à un impact, qui :
- s'étend transversalement dans l'habitacle du véhicule en regard des genoux (100, 102) et de la partie supérieure des tibias (106, 108) de l'occupant (104) ;
- est agencé longitudinalement à distance vers l'avant des surfaces avant (100, 106) de ses genoux (102) et de la partie supérieure de ses tibias (108) ;
- comporte une partie centrale (14C) supportée rigidement par un élément du véhicule pour empêcher la déformation de cette partie centrale ;
- et comporte deux parties latérales opposées, gauche (14G) ou droite (14D), reliées entre elles par la partie centrale (14C), dont chacune s'étend en regard d'un genou (102) et de la partie supérieure du tibia (108) d'une jambe associée, gauche ou droite, de l'occupant (104) et dont chacune (14G, 14D) est supportée rigidement par un élément du véhicule de manière à constituer chacune une partie déformable d'absorption d'énergie, **caractérisé en ce que** l'élément d'absorption est en forme générale d'une plaque (14) ;
**en ce que** la partie centrale (14C) de la plaque d'absorption (14) est supportée rigidement par un élément central (22) de support qui s'étend dans un plan central vertical et longitudinal ;
et **en ce que** chaque partie latérale, gauche (14G) ou droite (14D), de la plaque d'absorption (14) est supportée rigidement, au voisinage de son extrémité latérale éloignée de la partie centrale (14C), par un élément latéral associé (24, 26) qui s'étend dans un plan latéral vertical et longitudinal de manière que chaque partie latérale, gauche (14G) ou droite (14D), soit susceptible de se déformer sensiblement sur toute sa hauteur.

2. Agencement selon la revendication précédente, **caractérisé en ce que** l'élément central de support (22) est une portion de la colonne de direction qui équipe le poste de conduite du véhicule.

3. Agencement selon l'une quelconque des revendications précédentes, **caractérisé en ce que** la planche de bord (10) comporte une traverse supérieure horizontale (18) à laquelle sont fixés les éléments de support (22, 24, 26) de la plaque d'absorption (14).

4. Agencement selon l'une quelconque des revendications précédentes, **caractérisé en ce que** la planche de bord (10) comporte une peau (12) dont au moins une portion s'étend en regard de la partie inférieure des membres à protéger, et **en ce que** la plaque d'absorption (14) constitue une doublure de ladite portion (38) de la peau (12) de la planche de bord (10).

5. Agencement selon la revendication précédente, **caractérisé en ce que** la plaque d'absorption (14) formant doublure est assemblée à ladite portion (38) de la peau (12) de la planche de bord (10).

6. Agencement selon l'une quelconque des revendications précédentes, **caractérisé en ce que** la plaque d'absorption présente un profil galbé, d'axe transversal sensiblement horizontal, avec sa convexité orientée en direction des genoux (100) de l'occupant (104).

7. Agencement selon l'une quelconque des revendications précédentes, **caractérisé en ce que** la plaque d'absorption (14) est réalisée par moulage en matière plastique.

8. Agencement selon l'une quelconque des revendications précédentes, **caractérisé en ce que** chaque élément de support
latéral (14G, 14D) est un flasque métallique qui s'étend sensiblement dans un plan longitudinal et vertical.

9. Agencement selon l'une quelconque des revendications précédentes, **caractérisé en ce que** la distance moyenne, selon la direction transversale, entre un élément de support latéral (24, 26) et l'élément de support central (22) est supérieure à la largeur moyenne de la partie inférieure d'une jambe de l'occupant.

10. Agencement selon l'une quelconque des revendications précédentes, **caractérisé en ce que**, dans sa partie centrale (14C), et en partie haute, la plaque de protection (14) comporte un renflement (49) orienté vers l'avant délimité par une plaque horizontale (50), une plaque sensiblement verticale avant (52) et deux joues latérales de gauche (54) et de droite(56), le renflement 49 constituant un socle rigide qui comporte, à son extrémité supérieure et arrière, une partie parallélépipédique rectangle verticalement en saillie vers le haut formant un butoir (58).

11. Agencement selon l'une quelconque des revendications précédentes, **caractérisé en ce que** la plaque de protection (14) est délimitée par deux bords latéraux d'orientation verticale gauche (66) et droit (68), et **en ce que**, au-delà de son bord latéral droit (68), la plaque de protection (14) comporte une patte de butée (70) qui fait saillie transversalement vers la droite et qui est destinée à venir coopérer avec une portion en vis-à-vis d'un élément latéral associé (26), en cas d'impact ou de choc de manière que la plaque de protection soit supportée rigidement sensiblement le long de son bord vertical droit (68) d'extrémité latérale.

12. Agencement selon la revendication 11, **caractérisé en ce que**, au voisinage de son bord latéral vertical gauche (66) et en partie supérieure de la plaque de protection (14), cette dernière comporte une zone pleine de butée (74) qui s'étend en regard d'un élément latéral associé.

13. Planche de bord (10) de véhicule automobile pour un agencement selon l'une quelconque des revendications précédentes, **caractérisée en ce qu'**elle comporte une peau (12) et **en ce que** la plaque d'absorption (14) constitue une doublure d'au moins une portion (38) de la peau (12) de la planche de bord (10).

## Claims

1. Arrangement for protecting the knees (100, 102) of a front occupant of a vehicle of which the passenger compartment is fitted with a fascia panel (10), the protection arrangement comprising an element (14) for absorbing energy by plastic deformation under the impact of the knees (100, 102) of the occupant when the latter move longitudinally forward overall in the direction of the lower part of the fascia panel (10), when the vehicle suffers an impact, which arrangement:
- extends transversely in the passenger compartment of the vehicle opposite the knees (100, 102) and the upper part of the shins (106, 108) of the occupant (104);
- is arranged longitudinally at a distance in front of the front surfaces (100, 106) of his/her knees (102) and of the upper part of his/her shins (108);
- comprises a central part (14C) supported rigidly by an element of the vehicle so as to prevent deformation of this central part;
- and comprises two opposed lateral parts, left (14L) or right (14R), connected together by the central part (14C), each of which extends opposite a knee (102) and the upper part of the shin (108) of an associated left or right leg of the occupant (104) and each (14L, 14R) of which is supported rigidly by an element of the vehicle so as each to constitute a deformable, energy-absorbing part,
**characterized in that** the absorption element takes the general form of a plate (14);
**in that** the central part (14C) of the absorption plate (14) is supported rigidly by a central supporting element (22) which extends in a vertical and longitudinal central plane;
and **in that** each lateral part, left (14L) or right (14R), of the absorption plate (14) is supported rigidly, in the vicinity of its lateral end remote from the central part (14C), by an associated lateral element (24, 26) which extends in a vertical and longitudinal lateral plane in such a way that each lateral part, left (14L) or right (14R), is capable of deforming substantially over its entire height.

2. Arrangement according to the preceding claim, **characterized in that** the central supporting element (22) is a portion of the steering column with which the driver's station of the vehicle is fitted.

3. Arrangement according to any one of the preceding claims, **characterized in that** the fascia panel (10) comprises a horizontal upper crosspiece (18) to which are fixed the supporting elements (22, 24, 26) of the absorption plate (14).

4. Arrangement according to any one of the preceding claims, **characterized in that** the fascia panel (10) comprises a skin (12) of which at least a portion extends opposite the lower part of the limbs to be protected, and **in that** the absorption plate (14) constitutes a lining for said portion (38) of the skin (12) of the fascia panel (10).

5. Arrangement according to the preceding claim, **characterized in that** the absorption plate (14) forming the lining is joined together with said portion (38) of the skin (12) of the fascia panel (10).

6. Arrangement according to any one of the preceding claims, **characterized in that** the absorption plate has a rounded profile, with a substantially horizontal transverse axis and with its convexity facing the knees (100) of the occupant (104).

7. Arrangement according to any one of the preceding claims, **characterized in that** the absorption plate (14) is made by molding of plastics material.

8. Arrangement according to any one of the preceding claims, **characterized in that** each lateral supporting element (24, 26) is a metal flange which extends substantially in a longitudinal and vertical plane.

9. Arrangement according to any one of the preceding claims, **characterized in that** the average distance, in the transverse direction, between a lateral supporting element (24, 26) and the central supporting element (22) is greater than the average width of the lower part of an occupant's leg.

10. Arrangement according to any one of the preceding claims, **characterized in that** in its central part (14C), and at the top, the protection plate (14) comprises a bulge (49) oriented toward the front and defined by a horizontal plate (50), a substantially vertical front plate (52) and two lateral cheeks, left (54) and right (56), the bulge 49 constituting a rigid base which comprises, at its upper, rear end, a right parallelepipedal part projecting vertically upward and forming a buffer pad (58).

11. Arrangement according to any one of the preceding claims, **characterized in that** the protection plate (14) is defined by two vertically oriented lateral edges, left (66) and right (68), and **in that**, beyond its right-hand lateral edge (68), the protection plate (14) comprises a stop tab (70) which projects transversely toward the right and which is intended to cooperate with an opposing portion of an associated lateral element (26), in the event of an impact or bump, in such a way that the protection plate is supported rigidly substantially along its right-hand, vertical, lateral end edge (68).

12. Arrangement according to Claim 11, **characterized in that**, in the vicinity of its left-hand vertical lateral edge (66) and at the upper part of the protection plate (14), the latter comprises a solid stop zone (74) which extends opposite an associated lateral element.

13. Motor vehicle fascia panel (10) for an arrangement according to any one of the preceding claims, **characterized in that** it comprises a skin (12) and **in that** the absorption plate (14) constitutes a lining for at least a portion (38) of the skin (12) of the fascia panel (10).

## Patentansprüche

1. Anordnung zum Schutz der Knie (100, 102) eines vorne sitzenden Insassen eines Fahrzeugs, dessen Innenraum mit einem Armaturenbrett (10) ausgestattet ist, wobei die Schutzanordnung ein Element (14) zur Energieabsorption durch plastische Verformung unter dem Aufprall der Knie (100, 102) des Insassen aufweist, wenn letztere sich im Großen und Ganzen längs nach vorne in Richtung des unteren Bereichs des Armaturenbretts (10) bewegen, wenn das Fahrzeug einen Aufprall erfährt, das:
- sich quer im Innenraum des Fahrzeugs vor den Knien (100, 102) und dem oberen Bereich der Schienbeine (106, 108) des Insassen (104) erstreckt,
- längs in Abstand nach vorne zu den vorderen Flächen (100, 106) seiner Knie (102) und des oberen Bereichs seiner Schienbeine (108) angeordnet ist;
- einen zentralen Bereich (14C) aufweist, der starr von einem Element des Fahrzeugs getragen wird, um die Verformung dieses zentralen Bereichs zu verhindern;
- und zwei einander gegenüberliegende linke (14G) oder rechte Seitenbereiche (14D) aufweist, die miteinander über den zentralen Bereich (14C) verbunden sind, von denen jeder sich vor einem Knie (102) und dem oberen Bereich des Schienbeins (108) eines zugeordneten linken oder rechten Beins des Insassen (104) erstreckt, und von denen jeder (14G, 14D) starr von einem Element des Fahrzeugs getragen wird, um jeder einen verformbaren Bereich zur Energieabsorption zu bilden,
**dadurch gekennzeichnet, dass** das Absorptionselement die allgemeine Form einer Platte (14) hat;
dass der zentrale Bereich (14C) der Absorptionsplatte (14) starr von einem zentralen Tragelement (22) getragen wird, das sich in einer zentralen senkrecht und längs verlaufenden Ebene erstreckt;
und dass jeder linke (14G) oder rechte (14D) Seitenbereich der Absorptionsplatte (14) starr in der Nähe seines seitlichen Endes entfernt vom zentralen Bereich (14C) von einem zugeordneten seitlichen Element (24, 26) getragen wird, das sich in einer senkrecht und längs verlaufenden Ebene erstreckt, damit jeder linke (14G) oder rechte (14D) Seitenbereich sich im Wesentlichen über seine ganze Höhe verformen kann.

2. Anordnung nach dem vorhergehenden Anspruch, **dadurch gekennzeichnet, dass** das zentrale Tragelement (22) ein Abschnitt der Lenksäule ist, die zur Ausstattung des Fahrerplatzes des Fahrzeugs gehört.

3. Anordnung nach einem der vorhergehenden Ansprüche, **dadurch gekennzeichnet, dass** das Armaturenbrett (10) einen oberen waagrechten Querträger (18) aufweist, an dem die Tragelemente (22, 24, 26) der Absorptionsplatte (14) befestigt sind.

4. Anordnung nach einem der vorhergehenden Ansprüche, **dadurch gekennzeichnet, dass** das Armaturenbrett (10) eine Haut (12) aufweist, von der mindestens ein Abschnitt sich vor dem unteren Bereich der zu schützenden Gliedmaße erstreckt, und dass die Absorptionsplatte (14) eine Verkleidung des Abschnitts (38) der Haut (12) des Armaturenbretts (10) bildet.

5. Anordnung nach dem vorhergehenden Anspruch, **dadurch gekennzeichnet, dass** die eine Verkleidung bildende Absorptionsplatte (14) mit dem Abschnitt (38) der Haut (12) des Armaturenbretts (10) zusammengebaut ist.

6. Anordnung nach einem der vorhergehenden Ansprüche, **dadurch gekennzeichnet, dass** die Absorptionsplatte ein gewölbtes Profil mit einer im Wesentlichen waagrechten Querachse hat, wobei ihre konvexe Wölbung in Richtung der Knie (100) des Insassen (104) ausgerichtet ist.

7. Anordnung nach einem der vorhergehenden Ansprüche, **dadurch gekennzeichnet, dass** die Absorptionsplatte (14) durch Formen aus Kunststoff hergestellt wird.

8. Anordnung nach einem der vorhergehenden Ansprüche, **dadurch gekennzeichnet, dass** jedes seitliche Tragelement (24, 26) ein metallischer Flansch ist, der sich im Wesentlichen in einer längs und senkrecht verlaufenden Ebene erstreckt.

9. Anordnung nach einem der vorhergehenden Ansprüche, **dadurch gekennzeichnet, dass** der mittlere Abstand in Querrichtung zwischen einem seitlichen Tragelement (24, 26) und dem zentralen Tragelement (22) größer als die mittlere Breite des unteren Bereichs eines Beins des Insassen ist.

10. Anordnung nach einem der vorhergehenden Ansprüche, **dadurch gekennzeichnet, dass** die Schutzplatte (14) in ihrem zentralen Bereich (14C) und im oberen Bereich eine nach vorne gerichtete Verdickung (49) aufweist, die von einer waagrechten Platte (50), einer im Wesentlichen senkrechten vorderen Platte (52) und zwei links (54) und rechts (56) befindlichen Seitenwangen begrenzt wird, wobei die Verdickung (49) eine starren Sockel bildet, der an seinem oberen und hinteren Ende einen rechtwinkligen parallelepipedischen Bereich aufweist, der senkrecht nach oben vorsteht und einen Puffer (58) bildet.

11. Anordnung nach einem der vorhergehenden Ansprüche, **dadurch gekennzeichnet, dass** die Schutzplatte (14) von zwei Seitenrändern senkrechter Ausrichtung, einem linken (66) und einem rechten (68), begrenzt wird, und dass die Schutzplatte (14) jenseits ihres rechten Seitenrands (68) eine Anschlagleiste (70) aufweist, die quer nach rechts vorsteht und dazu bestimmt ist, mit einem gegenüberliegenden Abschnitt eines zugeordneten seitlichen Elements (26) im Fall eines Aufpralls oder Stoßes so zusammenzuwirken, dass die Schutzplatte im Wesentlichen entlang ihres rechten senkrechten Seitenendrands (68) starr getragen wird.

12. Anordnung nach Anspruch 11, **dadurch gekennzeichnet, dass** die Schutzplatte (14) in der Nähe ihres linken senkrechten Seitenrands (66) und in ihrem oberen Bereich eine massive Anschlagzone (74) aufweist, die sich vor einem zugeordneten seitlichen Element erstreckt.

13. Armaturenbrett (10) eines Kraftfahrzeugs für eine Anordnung nach einem der vorhergehenden Ansprüche, **dadurch gekennzeichnet, dass** es eine Haut (12) aufweist, und dass die Absorptionsplatte (14) eine Verkleidung mindestens eines Abschnitts (38) der Haut (12) des Armaturenbretts (10) bildet.
